(19) Europäisches Patentamt
European Patent Office
Office européen des brevets

(11) Veröffentlichungsnummer: **0 000 594**
**B1**

(12) # EUROPÄISCHE PATENTSCHRIFT

(45) Veröffentlichungstag der Patentschrift: **22.04.81**

(51) Int. Cl.³: **G 02 F 1/01**, G 02 F 1/137

(21) Anmeldenummer: **78200048.3**

(22) Anmeldetag: **19.06.78**

(54) **Elektro-optische Anzeigevorrichtung und Verfahren zum Betrieb dieser Vorrichtung.**

(30) Priorität: **29.07.77 CH 9397/77**

(43) Veröffentlichungstag der Anmeldung: **07.02.79 Patentblatt 79/3**

(45) Bekanntmachung des Hinweises auf die Patenterteilung: **22.04.81 Patentblatt 81/16**

(84) Benannte Vertragsstaaten: **FR GB NL**

(56) Entgegenhaltungen:
**DE-A-2 459 058**
**FR-A-2 068 975**
**FR-A-2 139 041**
**FR-A-2 212 977**
**FR-A-2 213 550**
**FR-A-2 224 778**
**FR-A-2 250 173**
**US-A-3 952 405**

(73) Patentinhaber: **BBC Brown, Boveri & Cie. (Aktiengesellschaft), CH-5401 Baden (CH)**

(72) Erfinder: **Kmetz, Allan R., Dr.-Ing., Kirchweg 21, CH-5415 Nussbaumen (CH)**
Erfinder: **Müller, Klaus, Dr.-Phys., Im Eichtal 2, CH-5400 Baden (CH)**
Erfinder: **Scheffer, Terry J., Dr.-Phys., Höhenweg 4, CH-8127 Forch (CH)**

**EP 0 000 594 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchgebühr entrichtet worden ist (Art. 99(1) Europäisches Patentübereinkommen).

ACTORUM AG.

# Elektro-optische Anzeigevorrichtung und Verfahren zum Betrieb dieser Vorrichtung

Die vorliegende Erfindung bezieht sich auf eine elektro-optische Anzeigevorrichtung zur Darstellung von aus getrennt ansteuerbaren Anzeigeelementen bestehenden Symbolen gemäss dem Oberbegriff des Patentanspruchs 1 und auf ein Verfahren zum Ansteuern einer solchen Vorrichtung.

Aus der DE-A 2459058 ist eine Anzeigevorrichtung der vorgenannten Art bekannt, bei der auf der Frontplatte Teilelektroden vorgesehen sind, von denen eine in Ermangelung einer Zuleitung nicht mit elektrischen Signalen beaufschlagbar ist. Dies hat zur Folge, dass sich in dem zwischen dieser Teilelektrode und den gegenüberliegenden Rückelektroden befindlichen elektro-optisch aktivierbaren Medium kein elektrisches Feld ausbilden und das Medium beeinflussen kann. Derartige Anzeigevorrichtungen sind für das Prinzip des verdrillten nematischen Flüssigkristalls konzipiert und müssen demnach mit Polarisatoren versehen und oberflächenbehandelt werden. Wird in einer derartigen Anzeigevorrichtung ein elektro-optisch aktivierbares Medium verwendet, welches Licht absorbiert, wenn es sich im feldfreien Zustand befindet, und Licht durchlässt, wenn an Front- und Rückelektroden Signale anliegen, deren Differenzspannung grösser als eine Übergangsspannung, bei der das Medium Licht durchlässt, ist, so erscheinen auf der Anzeigefläche helle Symbole auf dunklem Untergrund.

Aus der DE-OS 2450698 ist eine Anzeigevorrichtung bekannt, bei der jede Teilelektrodenfläche der Frontelektrode deckungsgleich mit der Fläche des Anzeigeelements ist. Das zwischen den Teilelektroden der Front- und Rückelektrode eines Symbols befindliche flüssigkristalline Medium wird durch elektrisches Ansteuern der entsprechenden Elektroden optisch aktiviert und streut das einfallende Umgebungslicht, so dass ein Betrachter das angesteuerte Symbol ablesen kann. Solche Anzeigevorrichtungen sind zur Ausnutzung des dynamischen Streueffekts von Flüssigkristallen konzipiert und weisen einen hohen Energieverbrauch auf, da sie mit relativ hohen Spannungen angesteuert werden. Auch diese Anzeigevorrichtung ist für elektro-optische Medien, deren Aktivierung auf einem anderen physikalischen Effekt beruht nicht immer mit Vorteil einzusetzen, da diese Vorrichtungen etwa bei Verwendung einer cholesterinischen Gast-Wirt-Substanz ebenfalls helle Symbole auf dunklem Untergrund darstellen. Dies ist nicht immer vorteilhaft, da die optimale Ablesbarkeit eines dargestellten Symbols dann gegeben ist, wenn es wie die Lettern einer Zeitung als dunkle Markierung gegen einen hellen Untergrund vorliegt.

Hier will die Erfindung Abhilfe schaffen. Die Erfindung, wie sie in den Ansprüchen gekennzeichnet ist, löst die Aufgabe, eine Anzeigevorrichtung der vorgenannten Art zu schaffen, bei der eine Darstellung von dunklen Symbolen auf hellem Untergrund durch Ansteuerung mit geringen Spannungen und ohne die Verwendung von Polarisatoren erzielt wird, und bei der die Ansteuerung zudem durch ein einfaches, einen geringen Energieverbrauch aufweisendes Verfahren erfolgt.

Mit der erfindungsgemässen Anzeigevorrichtung lassen sich selbst bei Beleuchtung mit unpolarisiertem Licht und bei Ansteuerung mit vergleichsweise niedrigen Spannungen noch äusserst kontraststarke Darstellungen der angezeigten Symbole auf hellem Untergrund erzielen. Hierbei ist es besonders vorteilhaft, dass die Ansteuerung der Vorrichtung mit denselben integrierten Schaltkreisen, die bei der sehr gebräuchlichen Drehkristall-Anzeigevorrichtung eingesetzt sind, erfolgen kann.

In der Zeichnung sind nachfolgend Ausführungsbeispiele des Erfindungsgegenstandes vereinfacht wiedergegeben.

Es zeigt:

Fig. 1 eine Aufsicht auf die Elektrodenmuster der Front- und der Rückelektrode einer Anzeigevorrichtung nach der Erfindung,

Fig. 2 eine Aufsicht auf die Anzeigeelemente der Anzeigevorrichtung nach Fig. 1,

Fig. 3 eine schematische Darstellung der Anzeigevorrichtung nach Fig. 1, wobei die Teilelektroden als zweizeilige Matrix geschaltet und drei Anzeigeelemente optisch angesteuert sind,

Fig. 4 eine schematische Darstellung der an die Elektroden der Anzeigevorrichtung nach Fig. 3 angelegten Ansteuersignale,

Fig. 5 die funktionale Abhängigkeit der Helligkeit des Untergrundes der Anzeigevorrichtung nach Fig. 1 von der an die Elektroden angelegten wirksamen Spannungsdifferenz U [Volt],

Fig. 6 eine schematische Darstellung der Mittel zum Ansteuern einer bekannten Drehkristall-Anzeigevorrichtung,

Fig. 7 eine schematische Darstellung der Mittel zum Ansteuern der Anzeigevorrichtung nach Fig. 1,

Fig. 8 ein Adressierschema zum Ansteuern der Anzeigevorrichtung nach Fig. 1,

Fig. 9 eine Aufsicht auf die Elektrodenmuster der Front- und Rückelektrode einer weiteren Anzeigevorrichtung nach der Erfindung, und

Fig. 10 die zur Einstellung und Aufrechterhaltung der nematischen Phase eines cholesterinischen Flüssigkristalls in einer gemäs Fig. 8 angesteuerten Anzeigevorrichtung notwendige minimale Spannungsdifferenz in Abhängigkeit von der Frequenz des an die Teilelektrode i gelegten höherfrequenten Signals.

In Fig. 1 ist auf der linken Seite die Aufsicht auf das Elektrodenmuster der auf einer transparenten Frontplatte aufgebrachten Front- und auf der rechten Seite das Elektrodenmuster der auf einer Rückplatte aufgebrachten Rückelektrode einer möglichen Ausführungsform der erfindungsgemässen Anzeigevorrichtung dargestellt. Mit a, b,

..., g, h sind die Teilelektroden der Front- und mit i, j die Teilelektroden der Rückplatte bezeichnet. Von den Elektroden erstrecken sich Zuleitungen zu den am Rand der Frontplatte gelegenen Anschlussfahnen a″, b″, ..., i″, j″. Die Linien zwischen den Elektroden bezeichnen Ausnehmungen A, A′, B, B′, durch welche die die Front- bzw. Rückplatte nahezu vollständig bedeckenden Teilelektroden voneinander elektrisch isoliert sind. Die dick ausgezogenen schwarzen Linien A′ bzw. B′ kennzeichnen hierbei die durch die Ausnehmungen bewirkte Begrenzung von Teilelektroden im Bereich eines zu einem darzustellenden Symbol gehörenden Anzeigeelementes.

In Fig. 2 sind die durch Ansteuerung sichtbar werdenden Anzeigeelemente a′, b′, ..., g′ dieser Anzeigevorrichtung dargestellt. Die Fläche jedes dieser Anzeigeelemente wird vollkommen von einer entsprechenden Teilelektrode der Frontplatte einerseits und vollkommen von der Fläche der Gegenelektrode j der Rückplatte andererseits überdeckt. Die Begrenzung jedes Anzeigeelementes ist durch den Überlappungsbereich der entsprechenden Teilelektrode der Frontplatte und der Teilelektrode j der Rückplatte gegeben.

Neben den zur Darstellung der Anzeigeelemente a′, ..., g′ notwendigen Teilelektroden a, ..., g weist die Frontplatte noch eine weitere Teilelektrode h auf, deren Fläche mit keinem der Anzeigeelemente koinzidiert. Auf der Frontplatte sind neben den Anschlussfahnen der auf der Frontplatte befindlichen Teilelektroden auch die Anschlussfahnen i″, j″ der beiden Teilelektroden i, j der Rückplatte angebracht. Diese Frontplatte kann beispielsweise in ein standardisiertes Verbindungsstück gesteckt werden, so dass jede Elektrode der Anzeigevorrichtung leicht anzusteuern ist. Der Kontakt von den Zuleitungen der Elektroden i und j der Rückplatte zu den Anschlussfahnen i″ und j″ kann in einfacher Weise durchgeführt werden, da die Zuleitungen der Elektroden i und j ebenfalls an den Rand der Rückplatte geführt werden und den zugehörigen Anschlussfahnen unmittelbar gegenüberliegen.

Die Elektrode h der Frontplatte überdeckt vollständig die Zuleitung der Teilelektrode j der Rückplatte und die Elektrode i der Rückplatte überdeckt vollkommen die Zuleitungen der Teilelektroden a, b, ..., g der Frontplatte, wobei unter Zuleitung derjenige Teil der Teilelektrode zu verstehen ist, der nicht mit der Fläche der Anzeigeelemente koinzidiert. Hierdurch wird vermieden, dass bei Betrieb der Vorrichtung die Zuleitungen sichtbar werden.

Eine vereinfachte Darstellung der Anzeigevorrichtung nach Fig. 1, wobei die Teilelektroden als zweiteilige Matrix geschaltet sind, ist in Fig. 3 wiedergegeben. Die beiden Teilelektroden i und j der Rückplatte sind durch zwei horizontale und die Teilelektroden a, b ..., h der Frontplatte durch acht vertikale Linien dargestellt. Die Schnittpunkte dieser Linien entsprechen denjenigen Bereichen der Anzeigevorrichtung, wo sich die entsprechenden Front- und Rückelektroden überlappen und ein lokales elektrisches Feld angelegt werden kann.

Soll etwa die Ziffer «7» angezeigt werden, so bedeutet dies, dass gemäss den Fig. 1 und 2 die Anzeigeelemente a′, b′ und c′ so angesteuert werden, dass sie dunkel bleiben, d.h., dass die betreffende Flüssigkristallschicht feldfrei ist, während sich die verbleibende, den Untergrund bildende Flüssigkristallschicht in einem ausreichend starken elektrischen Feld befindet, so dass ein heller Untergrund vorliegt.

Dies kann z.B. durch Ansteuerung der Teilelektroden a, b, ..., j mit den in Fig. 4 angegebenen Signalen erfolgen.

Hiernach wird die Elektrode j mit einem gepulsten Gleichspannungssignal $U_{g_j}$ der Amplitude 2V und in einem 50%igen Zyklus betrieben, während an der zweiten Teilelektrode i der Rückplatte ein kontinuierliches Gleichspannungssignal $U_{g_i}$ des Potentials V anliegt. Die frontplattenseitigen Elektroden a, b, c der Anzeigeelemente a′, b′, c′ werden mit dem gleichen gepulsten Gleichspannungssignal $U_{S_I}$ betrieben, welches an der rückplattenseitigen Elektrode j anliegt. Alle anderen frontplattenseitigen Elektroden d, e, f, g und h werden mit einem gepulsten Gleichstromsignal $U_{S_{II}}$ betrieben, welches um 180° zu dem an den Elektroden a, b, c und j liegenden Signal phasenverschoben ist und die gleiche Amplitude wie dieses aufweist. An den Anzeigeelementen a′, b′ und c′ liegt daher eine verschwindende Potentialdifferenz, während an den optisch nicht angewählten Elementen d′, e′, f′ und g′ und dem Überlappungsbereich zwischen den Elektroden h und j eine Potentialdifferenz von 2V und an allen anderen Bereichen eine Potentialdifferenz von V liegt. Kein Bereich der Anzeigefläche erhält dabei eine konstante Gleichspannung, so dass eine elektrochemische Zersetzung des Flüssigkristalls weitgehend vermieden wird.

Der Spannungspegel V wird so gewählt, dass er oberhalb einer kritischen Spannung $U_c$, bei der die cholesterinische Phase des Flüssigkristalls vollständig in die nematische Phase übergeht, liegt. Diese Spannung wird in der Folge «Übergangsspannung» genannt. Oberhalb der Übergangsspannung kann keine weitere Umorientierung des Flüssigkristalls mehr stattfinden und das die elektro-optische Eigenschaft charakterisierende Merkmal erreicht einen Sättigungswert.

In Fig. 5 ist bei einer den Gast-Wirt-Effekt zeigenden Substanz der folgenden Zusammensetzung:

1%

+ 5%

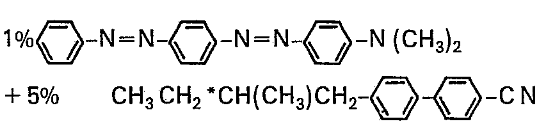

+ 94% einer nematischen Flüssigkristallmischung auf Biphenylbasis, welche in einer 8 μ dicken Anzeigezelle untergebracht ist, die Abhängigkeit der Helligkeit H des von der Zellrückwand reflektierten Umgebungslichtes in Abhängigkeit von der an die Zelle gelegten Spannung U [Volt] aufgetragen. Wegen des steilen Anstiegs und des raschen Erreichens eines Sättigungswertes ist bei

dieser Substanz das optische Ansprechvermögen einer oberhalb der Übergangsspannung $U_c$ liegenden Spannung V ebenso gross wie das einer Spannung 2V. Daher weisen alle hellen, als Untergrund wirkenden Bereiche der Anzeigevorrichtung, also gemäss Fig. 3 alle Anzeigeelemente, an denen die Differenzspannung V oder 2V anliegt, das gleiche optische Erscheinungsbild auf.

Von grosser Bedeutung ist hierbei natürlich der Energieverbrauch, da fast die gesamte Fläche der Anzeigezelle unter Spannung steht. Es ist daher ratsam, die Anzeige mit einer möglichst geringen Frequenz, etwa 2 Hz, zu betreiben, um die kapazitiven Verluste des Zellenstromes zu minimalisieren.

Das vorstehend beschriebene Verfahren zum Ansteuern der Anzeigevorrichtung hat den Vorteil, dass die gleichen integrierten Schaltkreise, die üblicherweise beim Ansteuern nematischer Drehzellen Verwendung finden, eingesetzt werden können. Die einzigen zusätzlichen Elemente sind ein einfacher logischer Inverter und ein Spannungsteiler.

In Fig. 6 sind die Mittel zum Ansteuern einer bekannten nematischen Drehkristallanzeige dargestellt. Hierbei liegt eine Gleichspannung U an einem integrierten Schaltkreis IC, von dem 50%ig gepulste Signale $U_a, \ldots, U_g$ an die Frontelektroden a, ..., g sowie ein Signal $U_{BP}$ an die Rückelektrode BP einer Flüssigkristallzelle D gelangen.

In Fig. 7 sind die Mittel zum Ansteuern der erfindungsgemässen Anzeigevorrichtung nach Fig. 1 dargestellt. Diese Mittel umfassen denselben integrierten Schaltkreis IC, an dem diesmal jedoch die Gleichspannung 2U liegt. Ein Teil des Signals $U_{BP}$ wird nun aber an die Frontelektrode h und ein weiterer Teil in einem Inverter I (etwa einen des Typs RGA CD 4041 A) um 180° phasenverschoben und danach an die Rückelektrode j gelegt. Die andere Rückelektrode i wird mit einer kontinuierlichen Gleichspannung V versorgt, welche beispielsweise in einem einfachen Spannungsteiler R′, R″ erzeugt werden kann.

Nachfolgend wird ein weiteres Verfahren zum Ansteuern der erfindungsgemässen Anzeigevorrichtung angegeben. Ein vereinfachtes Adressierschema dieses Verfahrens ist der Fig. 8 zu entnehmen. Alle Signale sind unipolare Pulszüge mit einem 50%igen Puls-Pause-Verhältnis und einer Amplitude U. Bei den Anzeigeelementen a′, b′ und c′ liegen sowohl an der Front- als auch an der Rückelektrode die gleichen Signale, so dass keine Potentialdifferenz besteht und sie im cholesterinischen lichtabsorbierenden Zustand bleiben. Die Anzeigeelemente d′, e′, f′ und g′ erhalten an der Front- und an der Rückelektrode um je 180° phasenverschobene Pulse, so dass die Potentialdifferenz eine bipolare Rechteckspannung der Amplitude U und ohne Gleichstromkomponente ist. Solange U grösser als die Übergangsspannung $U_c$ ist, befinden sich diese Anzeigeelemente im nematischen, nur wenig Licht absorbierenden Zustand.

Die Teilelektrode i der Rückplatte, welche die Zuleitungen der Frontelektroden überdeckt, wird mit einer höheren Frequenz, vorzugsweise einer harmonischen zur Frequenz der an die Elektroden der Frontplatte gelegten Signale, betrieben. Die Potentialdifferenz zwischen den Überlappungsbereichen der Frontelektroden und der Rückelektrode i weist dann die in Fig. 8 dargestellte Form auf. Bei einem 50%igen Puls-Pause-Verhältnis und einer Impulshöhe U des höherfrequenten Signals, ändert sich die Polarität dieser Spannungsdifferenzen mit der Periode der niederfrequenten Signale. Solange U ausreichend hoch über der Übergangsspannung liegt und die Pulsfrequenz ausreichend hoch ist, bleibt die von der Fläche der Rückelektrode i begrenzte Flüssigkristallschicht im nematischen und wenig Licht absorbierenden Flüssigkristallzustand, und zwar unabhängig von den Phasen der an Frontelektroden liegenden Signalen.

Die Frontelektrode h wird so wie die Teilelektroden a bis g betrieben. Daher befindet sich die Flüssigkristallschicht des gesamten Untergrundes im nematischen Zustand, während sich lediglich die Anzeigeelemente a′, b′, c′ im lichtabsorbierenden cholesterinischen Zustand befinden.

Da das höherfrequente Signal beispielsweise bei Uhren von der Frequenzkette der zur Ansteuerung üblicher Drehkristallanzeigen verwendeten Mittel abgegriffen wird, besteht ein besonderer Vorteil dieses Verfahrens darin, dass nun keine zwei Spannungsquellen, deren Pegel zur Vermeidung schädlicher Gleichstromkomponenten sorgfältig aufeinander abgestimmt sein müssen, notwendig sind. Darüber hinaus ist dieses Verfahren auch bei Flüssigkristallen mit Übergangsspannungen grösser 7,5 V in handelsüblichen, mit 15 V Spannung betriebenen integrierten Schaltkreisen verwendbar.

In Fig. 10 ist die zur Einstellung und Aufrechterhaltung der nematischen Phase eines cholesterinischen Flüssigkristalls in einer (wie vorgenannt beschrieben angesteuerten) Anzeigevorrichtung notwendige minimale Spannungsdifferenz U in Abhängigkeit von der Frequenz f des an die Teilelektrode i gelegten höherfrequenten Signals dargestellt. Hierbei ist ein Flüssigkristall mit einer Übergangsspannung von 7,5 [V] vorgesehen. Unterhalb 20 [Hz] kann das Flimmern der Anzeige auch bei Anheben der Spannung nicht eliminiert werden. Eine geeignete, fast flimmerfreie Anzeige ergibt sich bei U = 10 [V] und f = 30 [Hz].

Da wegen der kapazitiven Verluste an den Stellen der Anzeige, wo die hochfrequenten Spannungen anliegen, die verbrauchte Energie am grössten ist, empfiehlt es sich, die Flächen dieser Stellen zu verringern. Dies kann etwa durch eine Änderung der Elektroden gemäss Fig. 9 geschehen. Bei dieser Anordnung sind die Zuleitungen der Elektroden a, ..., g der Frontplatte sowie entsprechend der Elektrode i der Rückplatte so klein wie möglich gehalten. Es ist auch möglich, die Zuleitungen der Elektroden a, ..., g auf einander gegenüberliegende Ränder der Frontplatte zu führen. Durch diese und die vorgenannte Massnahme kann der Energieverlust der erfindungsgemässen Anzeigevorrichtungen etwa um den Faktor 2 herabgemindert werden.

Die erfindungsgemässe Anzeigevorrichtung ist nicht nur auf Zellen mit flüssigkristallinen Gast-Wirt-Substanzen beschränkt, sie ist beispielsweise auch für den Einsatz von elektro-phoretischen Suspensionen als elektro-optisch aktivierbarem Medium verwendbar und dies vor allem deswegen, da bei derartigen Substanzen an der gesamten Anzeigefläche ein elektrisches Potential anliegen muss, um einen voll definierten optischen Zustand beizubehalten oder einzustellen. Hierbei ist es von besonderem Vorteil, dass etwa die 7-Segment-Anzeige einer Zahl geschaltet werden kann, ohne dass die Zuleitungen zu diesen Segmenten sichtbar werden.

Bezeichnungsliste

| | |
|---|---|
| a, b, c, d, e, f, g | = Teilelektroden der Frontplatte zur Ansteuerung von Anzeigeelementen |
| h | = Teilelektrode der Frontplatte zur Abdeckung von Zuleitungen von Teilelektroden der Rückplatte |
| i | = Teilelektrode der Rückplatte zur Abdeckung der Zuleitungen von Teilelektroden der Frontplatte |
| j | = Teilelektrode der Rückplatte zur Ansteuerung von Anzeigeelementen |
| a′, b′, c′, d′, e′, f′, g′ | = Anzeigeelemente |
| a″, b″, c″, d″, e″, f″, g″, h″, i″, j″ | = Anschlussfahnen der Teilelektroden |
| A | = Ausnehmung der Frontelektrode |
| A′ | = Teil der Ausnehmung der Frontelektrode |
| B | = Ausnehmung der Rückelektrode |
| B′ | = Teil der Ausnehmung der Rückelektrode |
| $U_{S_I}$ | = Steuersignal an den Teilelektroden der Frontplatte der Anzeigeelemente der dargestellten Symbole |
| $U_{S_{II}}$ | = Steuersignal an den Teilelektroden der Frontplatte der einen Teil des Untergrunds bildenden Anzeigeelemente |
| $U_{g_i}$ | = Steuersignal an der Teilelektrode i |
| $U_{g_j}$ | = Steuersignal an der Teilelektrode j |
| 2 V | = Amplitude der Steuersignale $U_{S_I}$, $U_{S_{II}}$, und $U_{g_j}$ |
| U, 2 U | = Versorgungsspannungen eines integrierten Schaltkreises |
| $U_a, U_b \ldots, U_g$ | = Steuersignale an den Teilelektroden der Frontplatte einer Anzeigevorrichtung |
| $U_{BP}$ | = Steuersignal an den Teilelektroden der Rückplatte einer bekannten Anzeigevorrichtung, und Steuersignal an den Teilelektroden h und j der Anzeigevorrichtung nach der Erfindung |
| $U_c$ | = Übergangsspannung eines elektro-optisch aktivierbaren Mediums |
| H | = Helligkeit des Untergrunds |
| f [HZ] | = Frequenz eines Steuersignals $U_{g_i}$ |
| IC | = integrierter Schaltkreis |
| BP | = Rückelektrode einer Flüssigkristallzelle |
| D | = Flüssigkristallzelle |
| I | = Inverter |
| R′, R″ | = Spannungsteiler |

**Patentansprüche**

1. Elektro-optische Anzeigevorrichtung zur Darstellung von aus getrennt ansteuerbaren Anzeigeelementen (a′, b′, ..., g′) bestehenden Symbolen mit einer zwischen einer durchsichtigen Front- und einer Rückelektrode angeordneten Schicht eines elektro-optisch aktivierbaren Mediums, wobei die Frontelektrode auf einer transparenten Frontplatte und die Rückelektrode auf einer Rückplatte aufgebracht ist und beide Elektroden durch Ausnehmungen voneinander elektrisch isolierte, die Plattenoberflächen im Bereich des elektro-optisch aktivierbaren Mediums bedeckende Teilelektroden (a, b, ..., i, j) aufweisen, von denen die in den Anzeigeelementen enthaltenen Teilelektroden (a, b, ..., g, j) Zuleitungen aufweisen, und die Zuleitungen über eine Ansteuerschaltung mit elektrischen Steuersignalen beaufschlagbar sind, dadurch gekennzeichnet, dass auch jede der übrigen Teilelektroden (h, i) eine Zuleitung aufweist, dass ein elektro-optisches Medium vorgesehen ist, welches beim An-

legen der Steuersignale ($U_{g_I}$, $U_{g_I}$, $U_{S_I}$, $U_{S_{II}}$) Licht absorbiert, wenn die Potentialdifferenz zwischen der Front- und der Rückelektrode kleiner als eine mediumspezifische Übergangsspannung ($U_c$) ist, und Licht durchlässt, wenn diese Potentialdifferenz grösser als diese Übergangsspannung ($U_c$) ist, und dass zwischen den Teilelektroden (a, b, c) der Frontelektrode und der Teilelektrode (j) der Rückelektrode der Anzeigeelemente (a', b', c') der darzustellenden Symbole beim Betrieb der Anzeigevorrichtung eine Potentialdifferenz liegt, welche kleiner als die Übergangsspannung ($U_c$) ist, wohingegen zwischen den übrigen Teilelektroden (d, e, f, g, h) der Frontelektrode und den Teilelektroden (i, j) der Rückelektrode beim Betrieb der Anzeigevorrichtung eine Potentialdifferenz liegt, welche mindestens gleich der Übergangsspannung ($U_c$) ist.

2. Anzeigevorrichtung nach Anspruch 1, dadurch gekennzeichnet, dass als elektro-optisch aktivierbares Medium eine flüssigkristalline Gast-Wirt-Substanz, insbesondere ein mit mindestens einem pleochroitischen Farbstoff versehener cholesterinischer Flüssigkristall oder eine mit einem elektrisch geladenen Pigment versehene elektro-phoretische Suspension vorgesehen ist.

3. Anzeigevorrichtung nach Anspruch 1 oder 2, dadurch gekennzeichnet, dass in der Frontelektrode jede Teilelektrode (a, b, ..., f, g) bis auf eine (h) zumindest teilweise die Anzeigeelemente (a', b',..., f', g') überdeckt, dass diese eine Teilelektrode (h) der Frontelektrode die Zuleitungen der in der Rückelektrode angeordneten Teilelektroden (i, j) bis auf eine (i) überdeckt, und dass diese eine Teilelektrode (i) der Rückelektrode die Zuleitungen jeder der in der Frontelektrode angeordneten, zumindest teilweise die Anzeigeelemente überdeckenden Teilelektroden (a, b, ..., f, g), nicht aber die Zuleitung der einen, keines der Anzeigeelemente überdeckenden Teilelektrode (h) der Frontelektrode überdeckt.

4. Anzeigevorrichtung nach einem der Ansprüche 1 bis 3, dadurch gekennzeichnet, dass an einem Rand der Frontplatte Anschlussfahnen (a", ..., j") vorgesehen sind, an welche die Zuleitungen aller Teilelektroden (a, ..., j) geführt sind.

5. Anzeigevorrichtung nach einem der Ansprüche 1 bis 4, dadurch gekennzeichnet, dass auf der Rückelektrode ein schichtförmiger, metallisch reflektierender und elektrisch isolierender Belag vorgesehen ist.

6. Verfahren zum Betrieb der Anzeigevorrichtung nach Anspruch 3, dadurch gekennzeichnet, dass während der gesamten Betriebszeit an die Teilelektroden (a, b, c) der Frontelektrode und die Teilelektrode (j) der Rückelektrode, die die Anzeigeelemente (a', b', c') der darzustellenden Symbole überdecken, unipolare rechteckförmige Signale ($U_{S_I}$, $U_{g_I}$) mit gleichen Amplituden, Puls-Frequenzen, Phasen und Pulsformen angelegt werden, dass an die frontseitigen Teilelektroden (d, e, f, g) der im Untergrund enthaltenen Anzeigeelemente (d', e', f',g') sowie an die frontseitige, keines der Anzeigeelemente (a', ..., g') überdeckende Elektrode (h) Signale ($U_{S_{II}}$) angelegt werden, die gegenüber den an den Teilelektroden (a, b, c, j) der Anzeigeelemente (a', b', c') der darzustellenden Symbole liegenden Signale ($U_{S_I}$, $U_{g_I}$) um eine halbe Periode phasenverschoben sind, aber die gleiche Amplitude, Puls-Frequenz und Pulsform wie diese aufweisen, und dass an die keines der Anzeigeelemente überdeckende Teilelektrode (i) der Rückelektrode ein Signal ($U_{g_I}$) mit einer höheren Puls-Frequenz als die der anderen Signale angelegt wird.

7. Verfahren nach Anspruch 6, dadurch gekennzeichnet, dass das höherfrequente Signal ($U_{g_I}$) ein harmonisches Signal zu dem an den Teilelektroden (a, b, c, j) der Anzeigeelemente (a', b', c') der dargestellten Symbole liegenden Signal ($U_{S_I}$) ist.

8. Verfahren zum Betrieb der Anzeigevorrichtung nach Anspruch 3, dadurch gekennzeichnet, dass während der gesamten Betriebszeit an die Teilelektroden (a, b, c) der Frontelektrode und die Teilelektrode (j) der Rückelektrode, die die Anzeigeelemente (a', b', c') der darzustellenden Symbole überdecken, unipolare rechteckförmige Signale ($U_{S_I}$) mit gleichen Amplituden, Puls-Frequenzen, Phasen und Pulsformen angelegt werden, deren Amplituden (2V) mindestens gleich dem Doppelten der Übergangsspannung ($U_c$) sind, dass an die übrigen frontseitigen Teilelektroden (d, e, f, g, h) um eine halbe Periode gegenüber diesen Signalen ($U_{S_I}$) phasenverschobene, aber mit gleicher Amplitude, Puls-Frequenz und Pulsform wie diese versehene Signale ($U_{S_{II}}$) angelegt werden, und dass an die keines der Anzeigeelemente überdeckende Teilelektrode (i) der Rückelektrode ein Gleichspannungssignal, dessen Potential (V) die Hälfte der Amplitude der vorgenannten Signale beträgt, angelegt wird.

9. Verfahren nach einem der Ansprüche 6 bis 8, dadurch gekennzeichnet, dass die Puls-Frequenz der an den Anzeigeelementen (a', b', c') der darzustellenden Symbole liegenden Signale ($U_{S_I}$) höchstens [10] Hz beträgt.

10. Verfahren nach Anspruch 7, dadurch gekennzeichnet, dass die Puls-Frequenz des höherfrequenten Signals ($U_{g_I}$) zwischen 20 und 50 [Hz] liegt.

11. Verfahren nach Anspruch 10, dadurch gekennzeichnet, dass bei einem elektro-optisch aktivierbaren Medium mit einer Übergangsspannung ($U_c$) von ca. 7,5 V die Amplitude des höherfrequenten Signals ($U_{g_I}$) bei ca. 10 [V] und die Puls-Frequenz desselben bei ca. 30 [Hz] liegt.

**Patent Claims**

1. An electro-optical display device for representing symbols consisting of separately controllable display elements (a', b', ..., g'), which is provided with a layer, arranged between a transparent front electrode and a rear electrode, of a medium which can be electro-optically activated, the front electrode being attached to a transparent front plate and the rear electrode being attached to a rear plate and both electrodes being provided with part-electrodes (a, b, ..., i, j) which

are electrically insulated from one another by means of recesses and which cover the plate surfaces in the region of the medium which can be electro-optically activated, and of which part-electrodes the part-electrodes (a, b, ..., g, j) contained in the display elements are provided with feed lines, and electric control signals being applicable to the feed lines via a drive circuit, characterised in that each of the remaining part-electrodes (h, i) is also provided with a feed line, that an electro-optical medium is provided which absorbs light when the control signals ($U_{g_i}$, $U_{g_j}$, $U_{S_I}$, $U_{S_{II}}$) are applied if the potential difference between the front electrode and the rear electrode is less than a medium-related transition voltage ($U_c$), and transmits light when this potential difference is greater than the said transition voltage ($U_c$), and that, between the part-electrodes (a, b, c) of the front electrode and the part-electrode (j) of the rear electrode of the display elements (a′, b′, c′) of the symbols to be represented, a potential difference exists during the operation of the display device, this potential difference being smaller than the transition voltage ($U_c$), whereas between the remaining part-electrodes (d, e, f, g, h) of the front electrode and the part-electrodes (i, j) of the rear electrode, during the operation of the display device, a potential difference exists which is at least equal to the transition voltage ($U_c$).

2. A display device according to Claim 1, characterised in that, as the medium which can be electro-optically activated, a liquid-crystal guest-host substance and particularly a cholesteric liquid crystal which is provided with at least one pleochroic dye, or an electro-phoretic suspension which is provided with an electrica lly-charged pigment is provided.

3. A display device according to Claim 1 or 2, characterised in that in the front electrode every part-electrode (a, b, ..., f, g) except one (h) at least partly overlaps the display elements (a′, b′, ..., f′, g′), that this one part-electrode (h) of the front electrode overlaps the feed lines of the part-electrodes (i, j), arranged in the rear electrode, except for one (i), and that this one part-electrode (i) of the rear electrode overlaps the feed lines of every one of the part-electrodes (a, b, ..., f, g), arranged in the front electrode, which at least partly overlap the display elements, but does not overlap the feed line of the one part-electrode (h), which does not overlap any of the display elements, of the front electrode.

4. A display device according to one of Claims 1 to 3, characterised in that at one edge of the front plate, connection tabs (a″, ..., j″) are provided, to which the feed lines of all the part-electrodes (a, ..., j) are connected.

5. A display device according to one of Claims 1 to 4, characterised in that on the rear electrode a metallic-reflecting and electrically insulating coating is provided in the form of a layer.

6. A method for operating the display device according to Claim 3, characterised in that, during the whole operating time, unipolar rectangular signals ($U_{S_I}$, $U_{g_j}$), having identical amplitudes, pulse frequencies, phases and pulse shapes, are applied to the part-electrodes (a, b, c) of the front electrode and the part-electrode (j) of the rear electrode, which overlap the display elements (a′, b′, c′) of the symbols to be represented, that, to the front part-electrodes (d, e, f, g) of the display elements (d′, e′, f′, g′) contained in the background, and to the front electrode (h) which does not overlap any of the display elements (a′, ..., g′), signals ($U_{S_{II}}$) are applied which are phase-shifted by half a period with respect to the signals ($U_{S_I}$, $U_{g_j}$) which are applied to the part-electrodes (a, b, c, j) of the display elements (a′, b′, c′) of the symbols to be represented, but that these signals have the same amplitude, pulse frequency and pulse shape as the latter signals, and that a signal ($U_{g_i}$) having a higher pulse frequency than that of the other signals is applied to the part-electrode (i) which does not overlap any of the display elements, of the rear electrode.

7. A method according to Claim 6, characterised in that the signal ($U_{g_i}$) with the higher frequency is a signal which is harmonically related to the signal ($U_{S_I}$) which is applied to the part-electrodes (a, b, c, j) of the display elements (a′, b′, c′) of the symbols to be represented.

8. A method for operating the display device according to Claim 3, characterised in that, during the whole operating time, unipolar rectangular signals ($U_{S_I}$), having identical amplitudes, pulse frequencies, phases and pulse shapes, are applied to the part-electrodes (a, b, c) of the front electrode and the part-electrode (j) of the rear electrode, which overlap the display elements (a′, b′, c′) of the symbols to be represented, the amplitudes (2V) of which signals are at least twice the transition voltage ($U_c$), that, to the remaining front part-electrodes (d, e, f, g, h), signals ($U_{S_{II}}$) are applied which are phase-shifted by half a period with respect to these signals ($U_{S_I}$) but have the same amplitude, pulse frequency and pulse shape, and that a direct-voltage signal the potential (V) of which has half the amplitude of the aforementioned signals, is applied to the part-electrode (i), which does not overlap any of the display elements, of the rear electrode.

9. A method according to one of Claims 6 to 8, characterised in that the pulse frequency of the signals ($U_{S_I}$) applied to the display elements (a′, b′, c′) of the symbols to be represented is at most 10 [Hz].

10. A method according to Claim 7, characterised in that the pulse frequency of the signal ($U_{g_i}$) having the higher frequency is between 20 and 50 [Hz].

11. A method according to Claim 10, characterised in that, with a medium which can be electro-optically activated and which has a transition voltage ($U_c$) of approximately 7.5 V, the amplitude of the signal ($U_{g_i}$) having the higher frequency is about 10 [V] and the pulse frequency of the signal is about 30 [Hz].

## Revendications

1. Dispositif d'affichage électro-optique pour la visualisation de symboles composés d'éléments d'affichage (a', b' ..., g') pouvant être commandés séparément, avec un milieu activable électro-optiquement se présentant sous la forme d'une couche disposée entre une électrode frontale transparente et une électrode arrière, l'électrode frontale étant déposée sur une plaque frontale transparente et l'électrode arrière sur une plaque arrière et les deux électrodes comportant des électrodes partielles (a, b, ..., i, j) qui recouvrent les surfaces des plaques dans la zone qui correspond au milieu électro-optiquement activable et qui sont isolées les unes des autres par des évidements, celles de ces électrodes partielles (a, b, ..., i, j) qui sont contenues dans les éléments d'affichage étant munies de connexions et ces connexions pouvant recevoir des signaux électriques provenant d'un circuit de commande, caractérisé par le fait que chacune des autres électrodes partielles (h, i) est également munie d'une connexion, en ce qu'il est prévu un milieu électro-optique qui, lorsqu'on applique les signaux de commande ($U_{g_i}$, $U_{g_j}$, $U_{S_I}$, $U_{S_{II}}$) absorbe la lumière si la différence de potentiel entre l'électrode frontale et l'électrode arrière est inférieure à une tension dite «tension de transfert» ($U_c$) qui est une caractéristique du milieu utilisé et laisse passer la lumière lorsque cette différence de potentiel est plus grande que cette tension de transfert ($U_c$), et en ce que lorsqu'on utilise le dispositif d'affichage, entre les électrodes partielles (a, b, c) de l'électrode frontale et l'électrode partielle (j) de l'électrode arrière des éléments d'affichage (a', b', c') des symboles à représenter, est appliquée une différence de potentiel qui est plus petite que la tension de transfert ($U_c$) alors qu'entre les autres électrodes partielles (d, e, f, g, h) de l'électrode frontale et les électrodes partielles (i, j) de l'électrode arrière, est appliquée une différence de potentiel qui est au moins égale à la tension de transfert ($U_c$).

2. Dispositif d'affichage selon la revendication 1, caractérisé par le fait que comme milieu électro-optiquement activable on utilise une substance donneur-accepteur, dont l'un des composants est en suspension dans l'autre, et en particulier un cristal liquide cholestérinique chargé d'au moins une matière colorante pléochroïtique ou bien une suspension électrophorétique avec un pigment chargé électriquement.

3. Dispositif d'affichage selon l'une des revendications 1 ou 2, caractérisé par le fait que dans l'électrode frontale, chacune des électrodes partielles (a, b, ..., f, g) à l'exception de l'une d'entre elles (h) recouvre au moins partiellement les éléments d'affichage (a', b' ..., f', g'), que cette électrode partielle particulière (h) de l'électrode frontale recouvre les connexions des électrodes partielles (i, j) disposées dans l'électrode arrière, à l'exception de l'une d'entre elles (i), et que cette électrode partielle particulière (i) de l'électrode arrière recouvre les connexions de toutes les électrodes partielles (a, b, ..., f, g) disposées dans l'électrode frontale et qui recouvrent au moins partiellement les éléments d'affichage, à l'exception toutefois de la connexion de celle de ces électrodes partielles de l'électrode frontale, l'électrode partielle (h), qui ne recouvre aucun des éléments d'affichage.

4. Dispositif d'affichage selon l'une des revendications 1 à 3, caractérisé par le fait que sur l'un des bords de la plaque frontale sont prévues des lamelles de raccordement (a", ..., j") sur lesquelles sont ramenées les connexions de toutes les électrodes partielles (a, ..., j).

5. Dispositif d'affichage selon l'une des revendications 1 à 4, caractérisé par le fait que sur l'électrode arrière il est prévu un dépôt électriquement isolant formant une couche réfléchissante à la manière d'un métal.

6. Procédé pour la mise en œuvre du dispositif d'affichage selon la revendication 3, caractérisé par le fait que pendant tout le temps où le dispositif est en fonctionnement on applique sur les électrodes partielles (a, b, c) de l'électrode frontale et sur l'électrode partielle (j) de l'électrode arrière qui recouvrent les éléments d'affichage (a', b', c') des symboles à représenter, des signaux unipolaires rectangulaires ($U_{S_I}$, $U_{g_j}$) ayant des amplitudes, des fréquences de pulsation, des phases et des formes d'impulsions identiques, en ce que sur les électrodes partielles de la face frontale (d, e, f, g) des éléments d'affichage (d', e', f', g') ainsi que sur l'électrode frontale (h) qui ne recouvre aucun des éléments d'affichage (a' ..., g') on applique des signaux ($U_{S_{II}}$) qui sont déphasés d'une demi-période par rapport aux signaux ($U_{S_I}$, $U_{g_j}$) appliqués aux électrodes partielles (a, b, c, j) des éléments d'affichage (a', b', c') des symboles à représenter, mais qui ont la même amplitude, la même fréquence et la même forme d'impulsion que ces derniers et en ce que sur l'électrode partielle (i) de l'électrode arrière, qui ne recouvre aucun des éléments d'affichage, on applique un signal ($U_{g_i}$) dont la fréquence est plus élevée que celle des autres signaux.

7. Procédé selon la revendication 6, caractérisé par le fait que le signal à fréquence plus élevée ($U_{g_i}$) est un signal harmonique du signal ($U_{S_I}$) appliqué aux électrodes partielles (a, b, c, j) des éléments d'affichage (a', b', c') des symboles à représenter.

8. Procédé pour la mise en œuvre du dispositif d'affichage selon la revendication 3, caractérisé par le fait que pendant tout le temps où le dispositif est en fonctionnement, sur les électrodes partielles (a, b, c) de l'électrode frontale et sur l'électrode partielle (j) de l'électrode arrière qui recouvrent les éléments d'affichage (a', b', c') des symboles à représenter, on applique des signaux unipolaires rectangulaires ($U_{S_I}$) dont les amplitudes (2V) sont au moins égales au double de la tension de transfert ($U_c$), en ce que sur les autres électrodes partielles de l'électrode frontale (d, e, f, g, h) on applique des signaux ($U_{S_{II}}$) déphasés d'une demi-période par rapport à ces signaux ($U_{S_I}$) mais ayant la même amplitude, la

même fréquence et la même forme d'impulsions que ces derniers, et en ce que sur l'électrode partielle (i) de l'électrode arrière, qui ne recouvre aucun des éléments d'affichage, on applique un signal de tension continue dont le potentiel (V) correspond à la moitié de l'amplitude des signaux précités.

9. Procédé selon l'une des revendications 6 à 8, caractérisé par le fait que la fréquence des impulsions qui constituent les signaux ($U_{S_i}$) appliqués aux éléments d'affichage (a', b', c') des symboles à représenter est au maximum de 10 Hz.

10. Procédé selon la revendication 7, caractérisé par le fait que la fréquence des impulsions qui constituent le signal ($U_{g_i}$) à fréquence plus élevée est comprise entre 20 et 50 Hz.

11. Procédé selon la revendication 10, caractérisé par le fait qu'avec un milieu électro-optiquement activable ayant une tension de transfert ($U_c$) d'environ 7,5V, l'amplitude du signal ($U_{g_i}$) de fréquence plus élevée est de l'ordre de 10V et que la fréquence de ce signal est de l'ordre de 30 Hz.

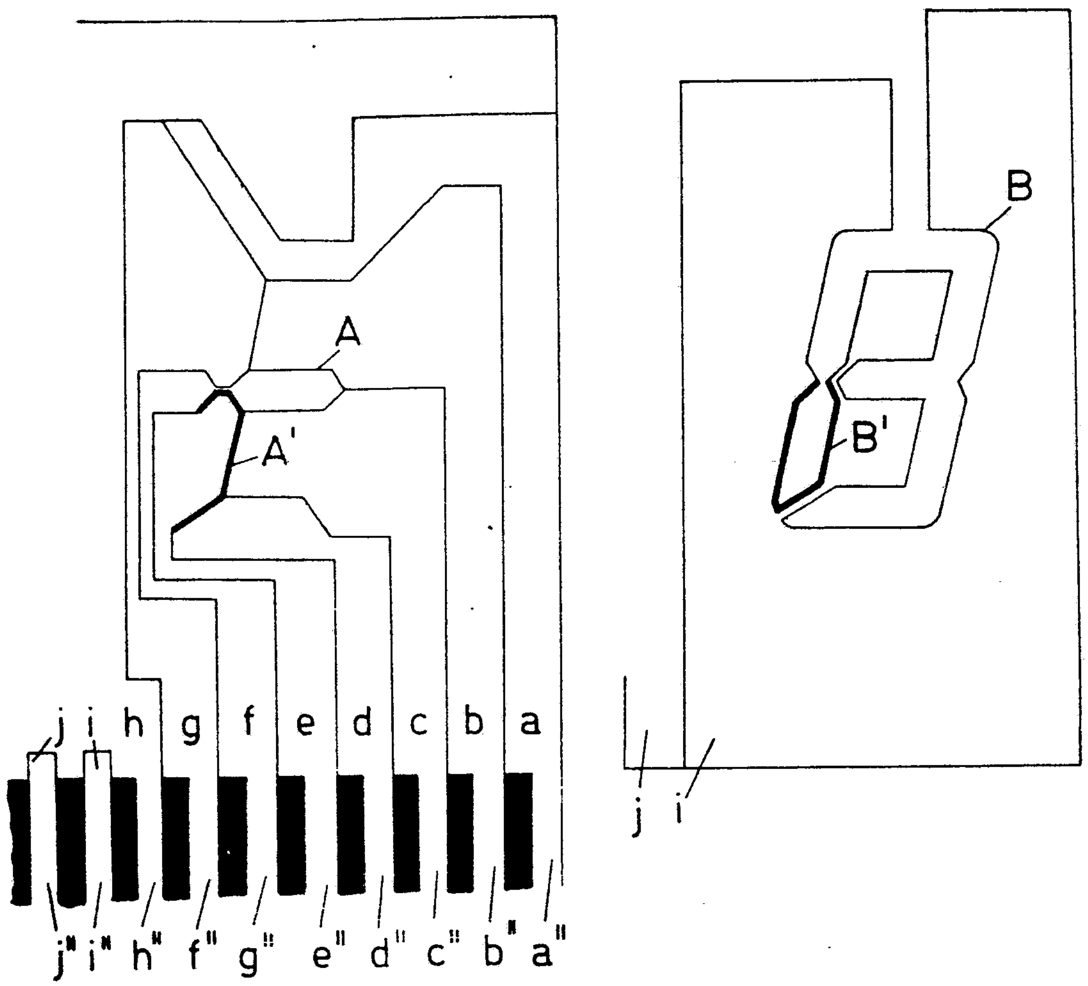


FIG.1

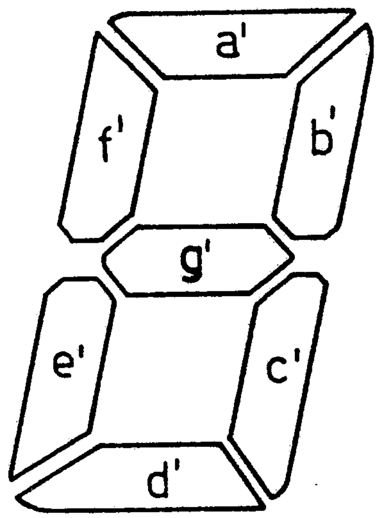


FIG. 2

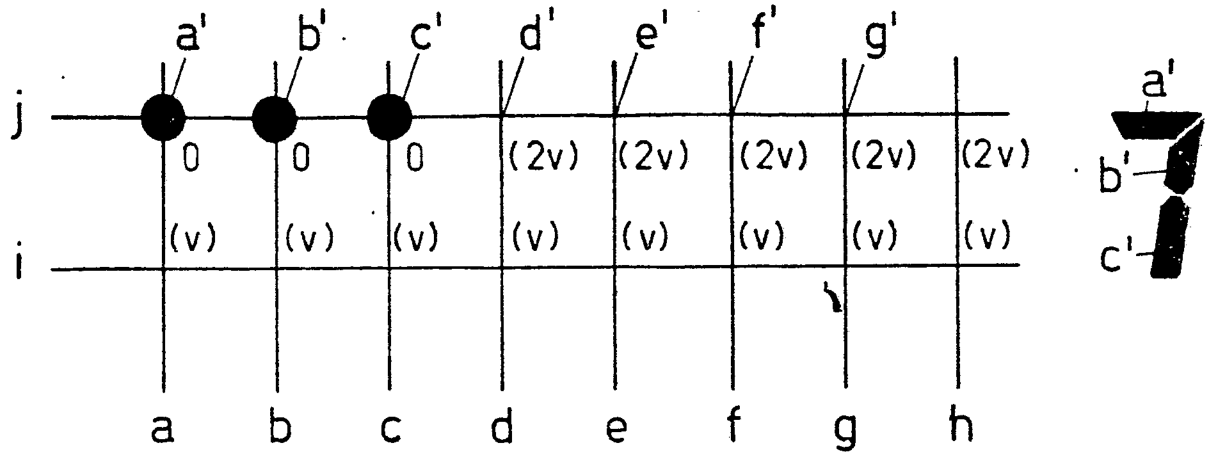
a'
b'
c'
d'
e'
f'
g'
j
i
0
0
0
(2v)
(2v)
(2v)
(2v)
(2v)
(v)
(v)
(v)
(v)
(v)
(v)
(v)
(v)
a
b
c
d
e
f
g
h
a'
b'
c'

FIG.3

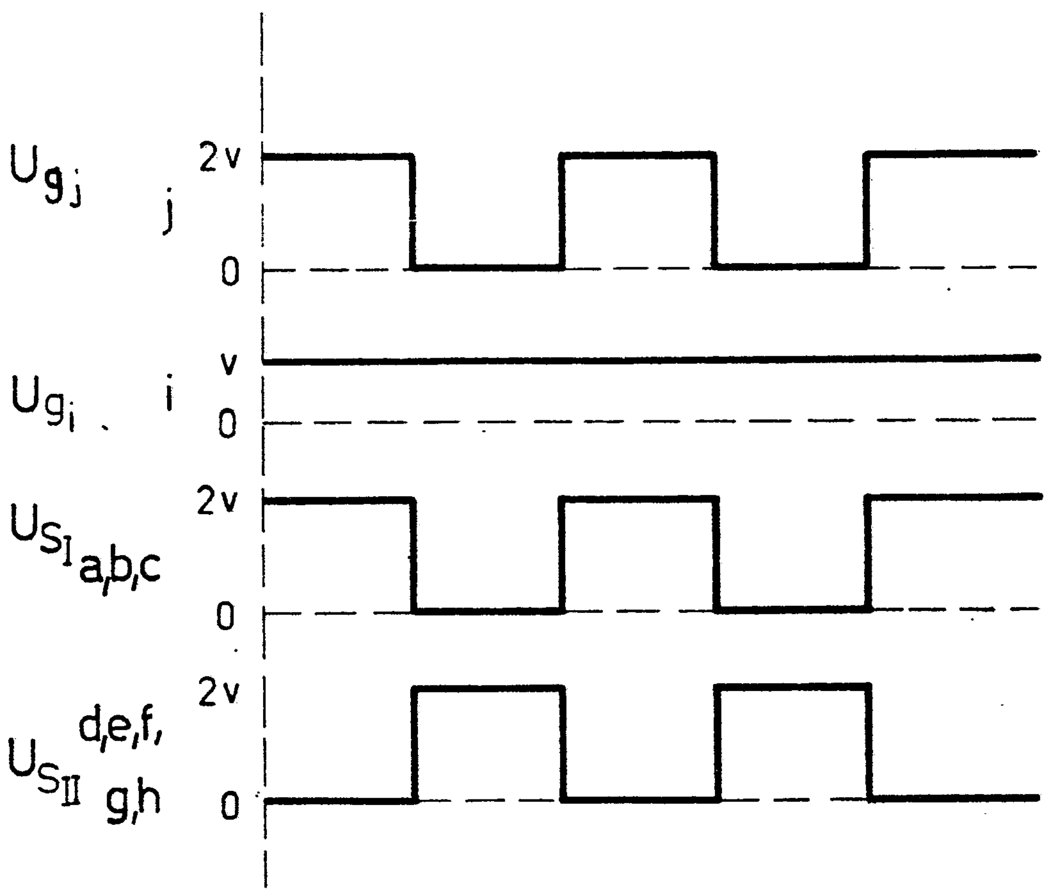
$U_{g_j}$
j
2v
0
$U_{g_i}$
i
v
0
$U_{S_I}$ a,b,c
2v
0
$U_{S_{II}}$ d,e,f, g,h
2v
0

FIG.4

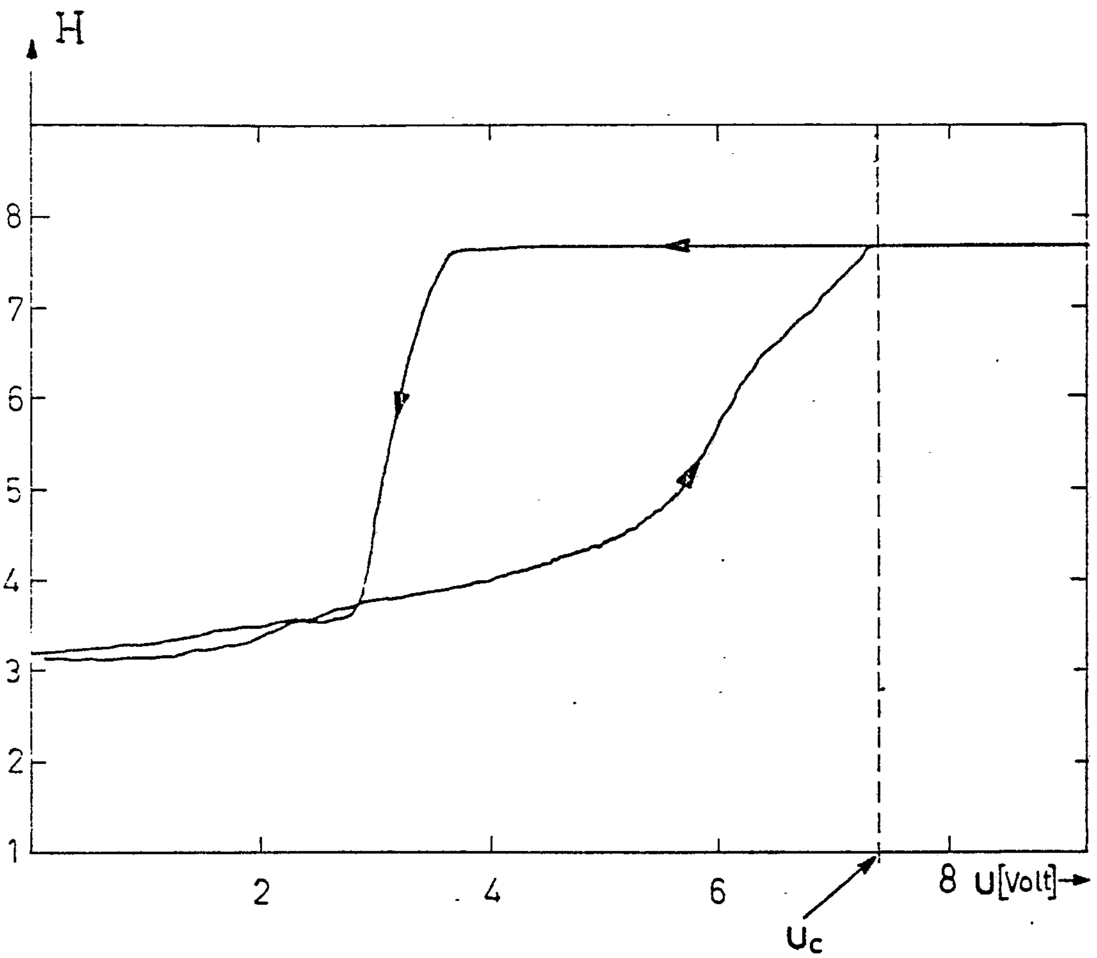


FIG.5

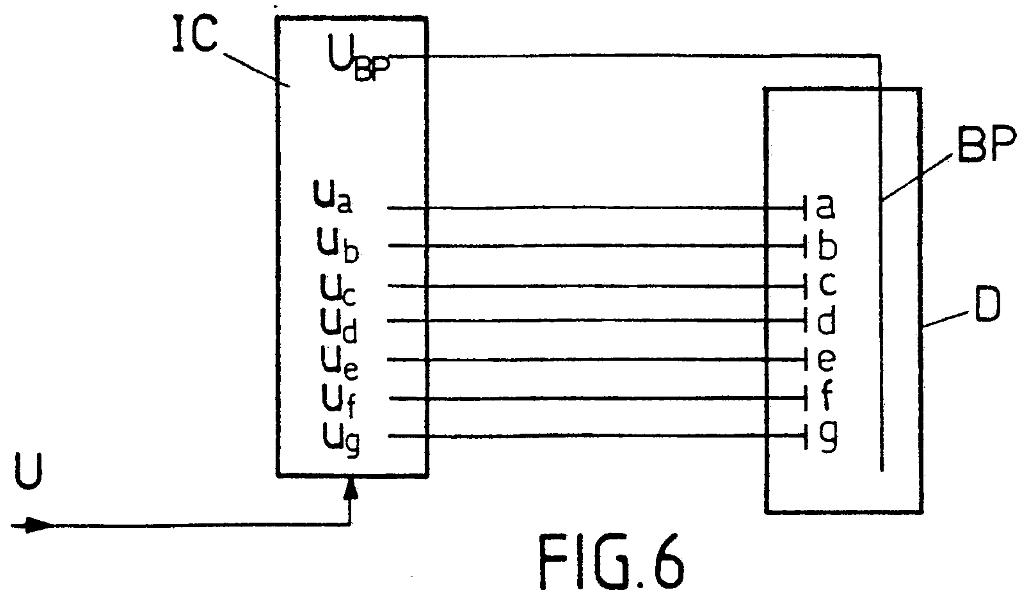
IC
$U_{BP}$
BP
$U_a$
$U_b$
$U_c$
$U_d$
$U_e$
$U_f$
$U_g$
a
b
c
d
e
f
g
D
U

FIG.6

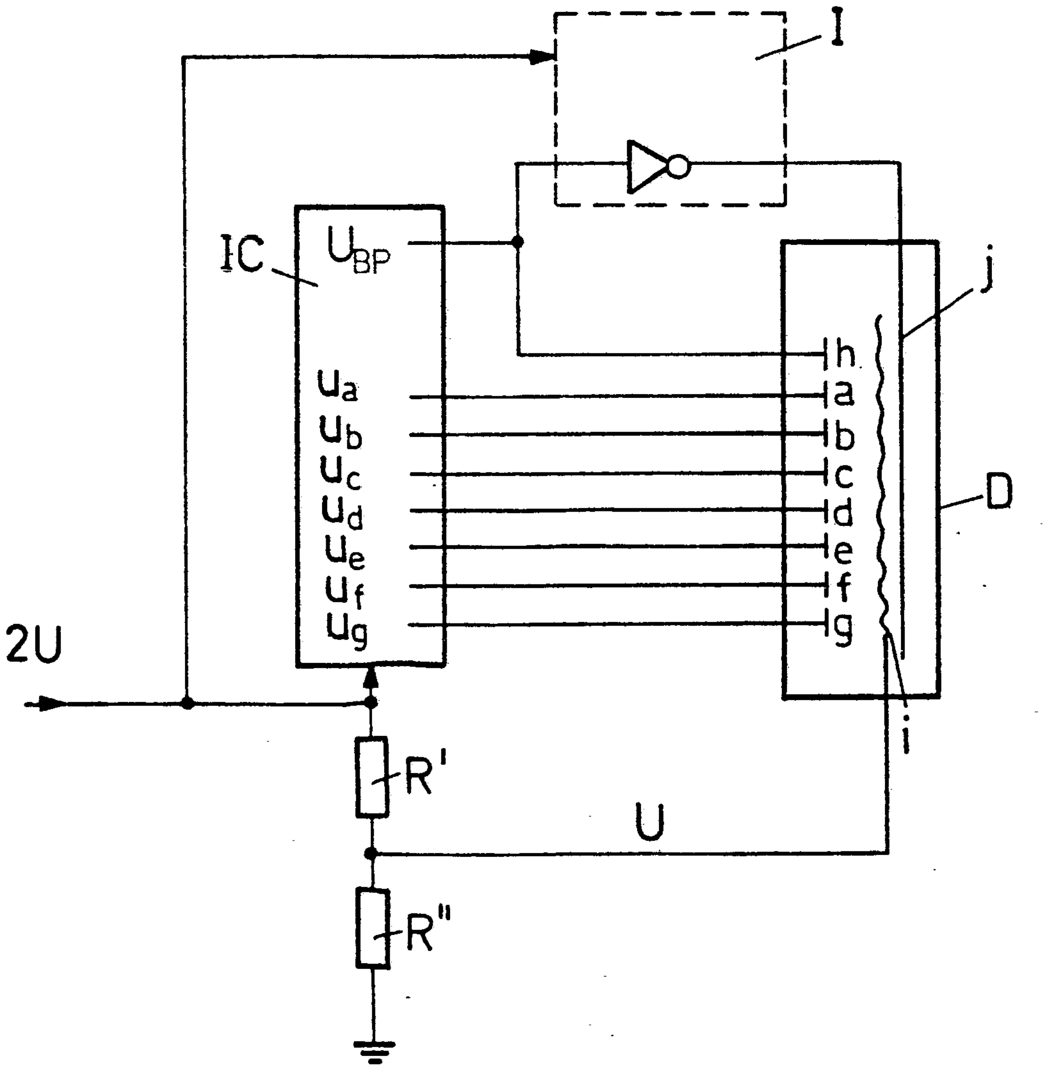
I
IC
$U_{BP}$
j
h
$U_a$
$U_b$
$U_c$
$U_d$
$U_e$
$U_f$
$U_g$
a
b
c
d
e
f
g
D
2U
i
R'
U
R''

FIG.7

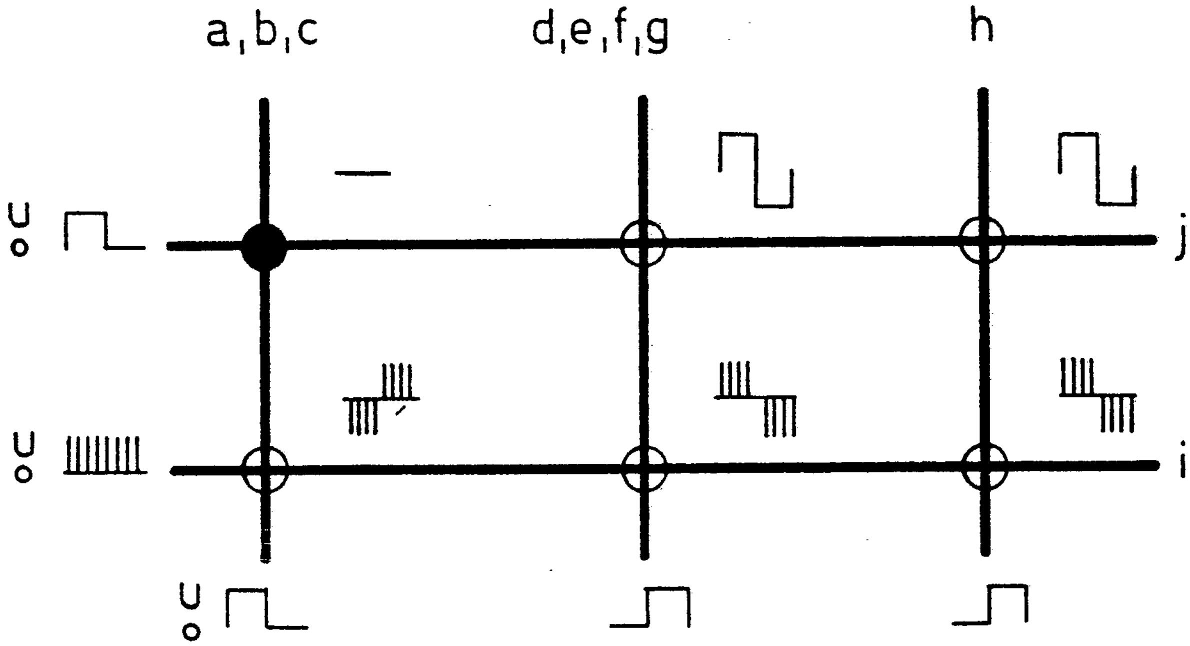


FIG. 8

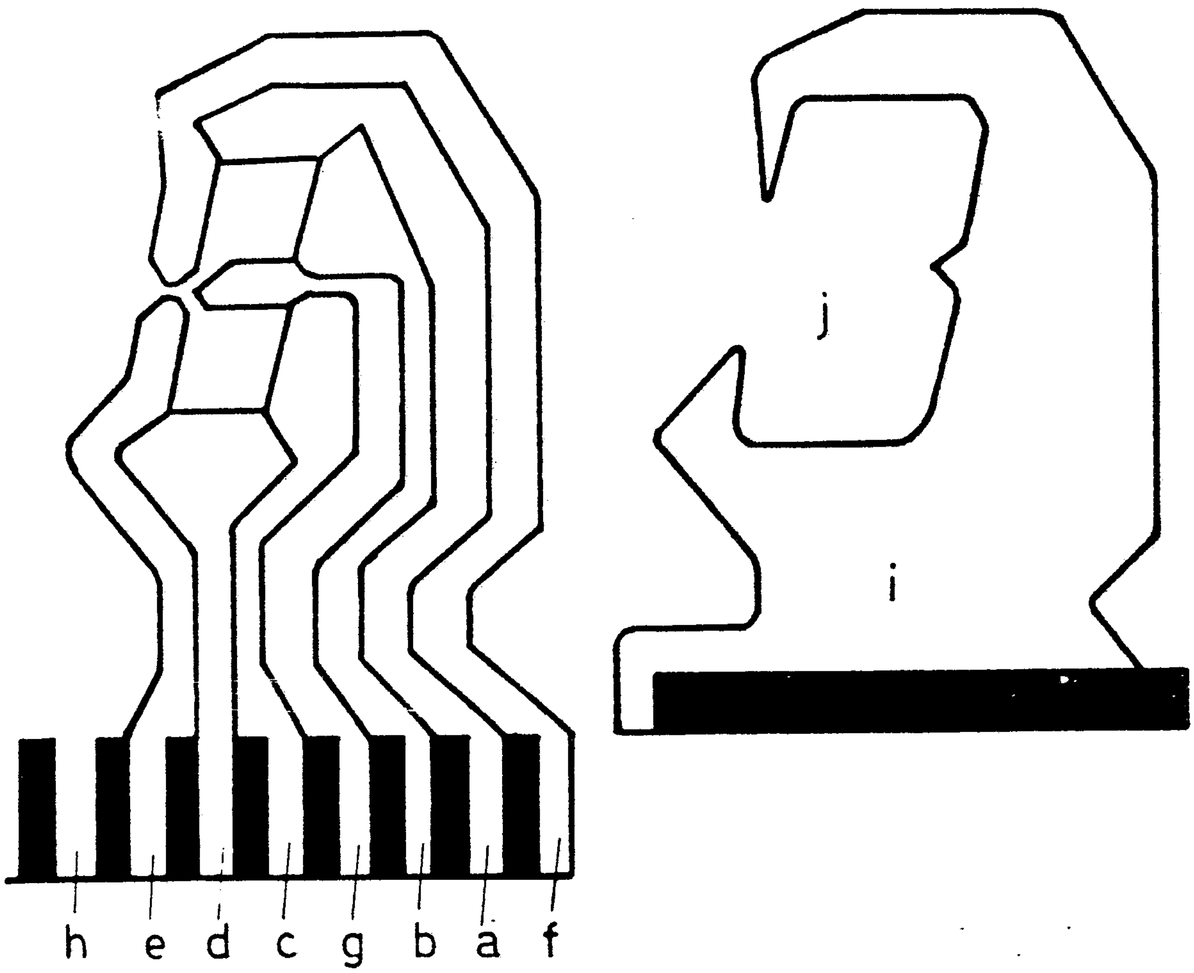


FIG. 9

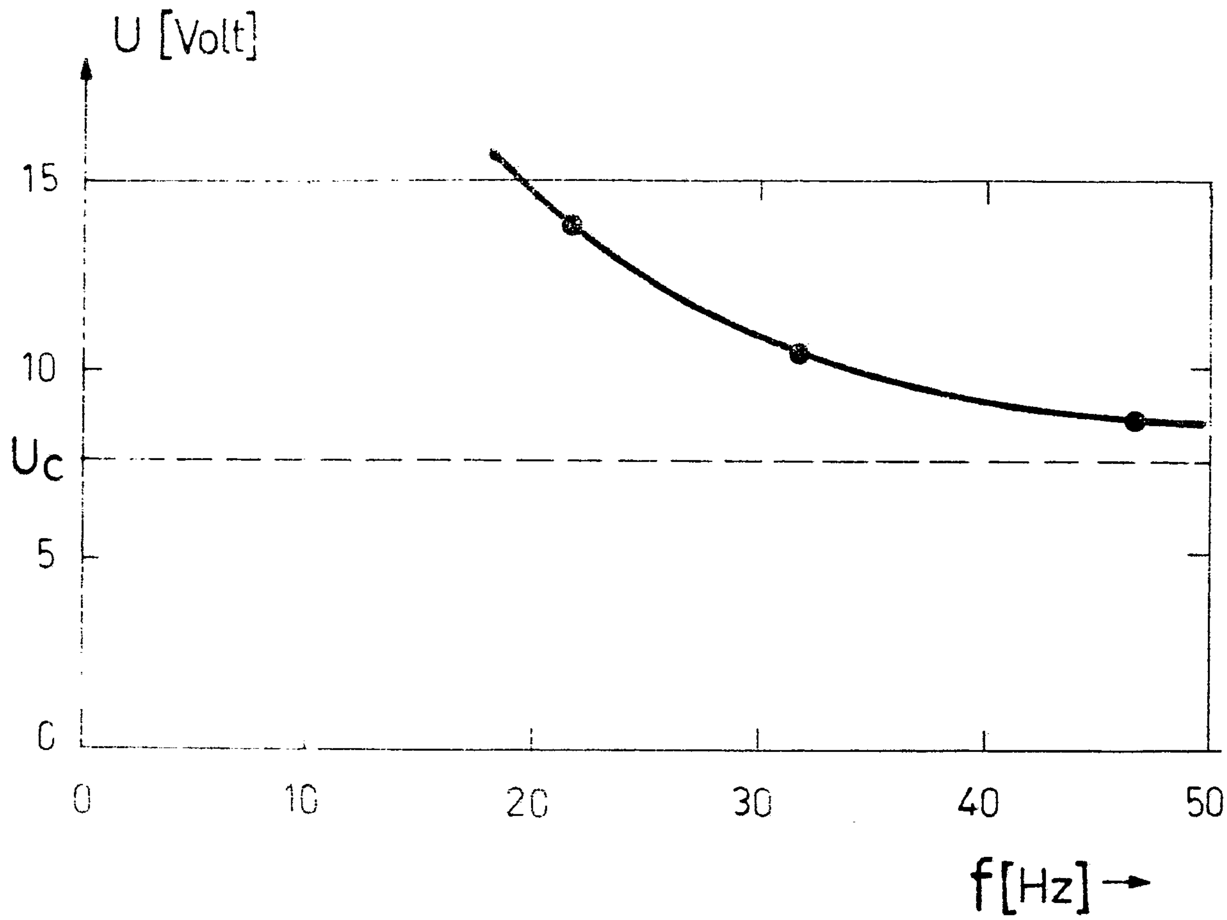


FIG.10